# DEMANDE DE BREVET EUROPEEN

(11) **EP 1 148 734 A1**
(43) Date de publication de la demande: **24.10.2001**
(21) Numéro de dépôt: 01201112.8
(22) Date de dépôt: 26.03.2001
(51) Int. Cl.: H04N 7/50

(54) **Réseau, terminal d'émission et méthode de constitution d'un point d'accès dans un flux de données**

(30) Priorité: 04.04.2000 FR 0004288
(71) Demandeur: Koninklijke Philips Electronics N.V., 5621 BA Eindhoven (NL)
(72) Inventeur: Duquesnois, Laurent, c/o Société Civile S.P.I.D, 75008 Paris (FR)
(74) Mandataire: de la Fouchardière, Marie-Noelle

(57) **Abrégé**

L'invention concerne le domaine de la description de scène multimédia. De façon classique un flux de description de scène comporte des données codées relatives à des description de scène, et des données codées relatives à des modifications de scène. Des points d'accès au flux sont prévus pour permettre à un utilisateur de se brancher sur le flux à n'importe quel instant. Ces points d'accès sont constitués par les données relatives à une description complète de scène. Conformément à l'invention, lorsqu'une description de scène est encodée, les données codées qui en résultent sont stockées dans une mémoire. Et les points d'accès insérés dans le flux sont constitués par les données codées stockées dans cette mémoire.

On évite ainsi d'encoder une nouvelle description de scène à chaque fois qu'un point d'accès doit être inséré dans le flux.

Application : BIFS notamment.

## Description

### Domaine de l'invention

L'invention concerne un réseau de télécommunications comportant au moins :
- un terminal d'émission comportant un codeur de descriptions de scènes multimédia pour délivrer un flux de données qui comporte des points d'accès constitués par des données encodées relatives à une description de scène complète,
- et un terminal de réception susceptible de se connecter à un instant quelconque audit terminal d'émission pour recevoir ledit flux de données.

Elle concerne également :
- un terminal comportant un codeur de descriptions de scènes multimédia pour délivrer un flux de données qui comporte des points d'accès constitués par des données encodées relatives à une description de scène complète;
- une méthode de constitution d'un point d'accès dans un flux de données, lesdits points d'accès étant constitués par des données encodées relatives à une description de scène complète;
- et un signal véhiculant un flux de données qui comporte des points d'accès constitués par des données encodées relatives à une description de scène complète.

L'invention a d'importantes applications dans le domaine des transmissions multi-utilisateurs de données multimédia. Elle est par exemple applicable à la post-production d'émissions de télévision, ou à la superposition de scènes multimédia sur une vidéo numérique traditionnelle par exemple pour transmettre de la publicité.

### Arrière plan technologique de l'invention

La norme MPEG4 est notamment décrite dans le document ISO/IEC 14496-1 intitulé « Information Technology - Very Low Bit Rate Audio-Visual Coding - part 1 : systems » publié par l'ISO en 1999.

Cette norme décrit des moyens de codage individuel d'objets audio, visuels ou audiovisuels, et des moyens pour composer des scènes multimédia à partir de tels objets. Les informations nécessaires à la composition d'une scène constituent la description de la scène.

Ce concept de description de scène est exposé au paragraphe 9 de la norme MPEG-4. En résumé, dans la norme MPEG-4, les descriptions de scène ont une structure arborescente.

Chaque noeud de la structure correspond à un objet et contient un ensemble de paramètres, notamment des paramètres de placement de l'objet dans le temps et dans l'espace. Une telle structure arborescente n'est pas statique : les paramètres des noeuds peuvent être modifiés, des noeuds peuvent être ajoutés, remplacés, supprimés.

La norme MPEG-4 définit deux types de commandes relatives aux descriptions de scènes :d'une part une commande de remplacement de scène qui contient une description de scène entière, et d'autre part des commandes de modification de scène qui contiennent des modifications à apporter à une description de scène. Ces commandes de remplacement et de modification de scène font partie d'un flux de données couramment appelé flux BIFS (de l'anglais Binary Format For Scene). Les commandes de remplacement de scène constituent les seuls points d'accès à ce flux, c'est-à-dire les seuls points par lesquels un utilisateur peut se brancher sur ce flux.

L'invention se rapporte à la constitution d'un point d'accès dans un flux de données relatives à des descriptions de scène multimédia.

### Résumé de l'invention

Un réseau de télécommunication selon l'invention, et tel que décrit dans le paragraphe introductif, est caractérisé en ce que ledit terminal d'émission comporte une mémoire de stockage pour stocker des données encodées à un instant donné, relatives à une description d'une scène complète, les données stockées étant destinées à être utilisées à un ou plusieurs instants ultérieurs pour constituer un ou plusieurs points d'accès.

Un terminal selon l'invention et tel que décrit dans le paragraphe introductif est caractérisé en ce qu'il comporte une mémoire de stockage pour stocker des données encodées à un instant donné, relatives à une description d'une scène complète, les données stockées étant destinées à être utilisées à un ou plusieurs instants ultérieurs pour constituer un ou plusieurs points d'accès.

Une méthode selon l'invention, et telle que décrite dans le paragraphe introductif, de constitution d'un point d'accès dans un flux de données, est caractérisée en ce qu'elle comporte une étape de stockage de données encodées à un instant donné, relatives à une description de scène complète, les données stockées étant destinées à être utilisées à un ou plusieurs instants ultérieurs pour constituer un ou plusieurs points d'accès.

Enfin, un signal selon l'invention et tel que décrit dans le paragraphe introductif est caractérisé en ce qu'au moins plusieurs points d'accès successifs sont constitués par une même description de scène complète.

Conformément à l'invention, on stocke donc des données encodées relatives à la description d'une scène complète, et ces donniées encodées sont ensuite réutilisées pour constituer les points d'accès suivants au flux de données. On évite ainsi d'avoir à ré-encoder une scène, à chaque fois que l'on veut transmettre un point d'accès.

Dans un mode de réalisation préférentiel de l'invention, les points d'accès sont introduits dans le flux de données au rythme d'une horloge de remplacement, et le flux de données comporte des données relatives à des modifications à apporter à une scène complète qui sont introduites dans le flux au rythme d'une horloge de modification présentant un déphasage non nul avec l'horloge de remplacement.

Par exemple, on transmet des points d'accès toutes les i secondes à partir d'un instant initial t₀, et des données relatives à des modifications de scène toutes j millisecondes à partir de l'instant t₁ décalé de k millisecondes par rapport à t₀ (avec k≠j).

Ainsi, on s'assure que les instants de transmission des points d'accès et des données relatives aux modifications de scène ne coïncident pas.

Pour certaines applications, en particulier lorsque la scène à transmettre est amenée à changer assez fréquemment, il est avantageux de renouveler la description de scène complète pour laquelle des données encodées sont stockées en mémoire, au rythme d'une horloge de renouvellement. Par exemple la description de scène complète est renouvelée toutes les minutes.

### Brève description des dessins

L'invention sera mieux comprise et: d'autres détails apparaîtront dans la description qui va suivre en regard des dessins annexés qui sont donnés à titre d'exemples non limitatifs et dans lesquels :
- la figure 1 représente un exemple de réseau selon l'invention,
- la figure 2 représente un schéma en bloc d'un terminal d'émission selon l'invention,
- la figure 3 est un diagramme de temps indiquant les instants auxquels sont transmis les points d'accès et les données relatives aux modifications de scène, ainsi que les descriptions de scènes complètes auxquelles ces modifications se rapportent.

### Description d'un mode de réalisation préférentiel de l'invention

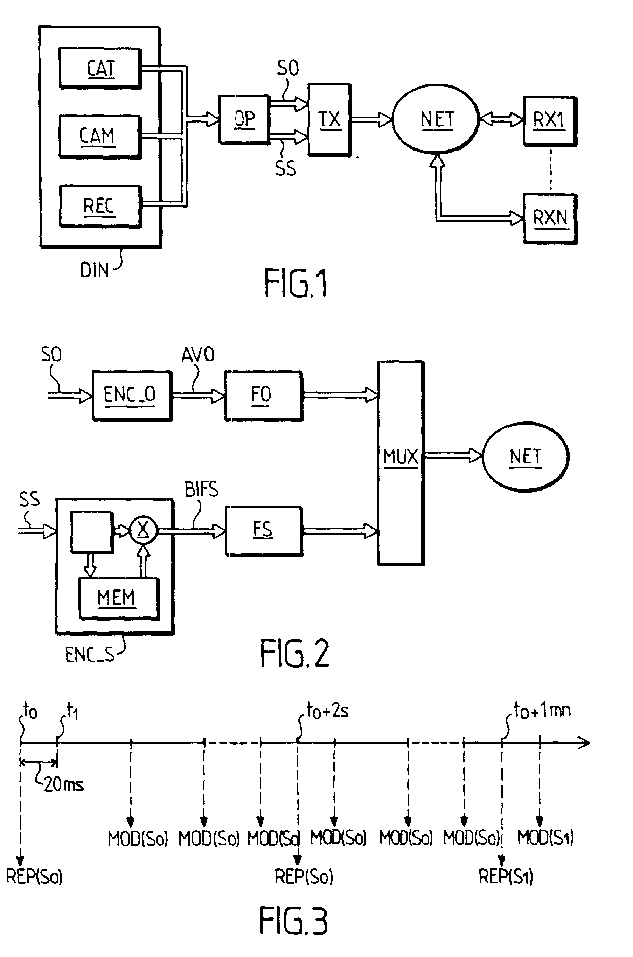

Sur la figure 1 on a représenté un exemple de réseau selon l'invention. Ce réseau comporte une source d'objets audio et / ou vidéo, DIN, qui est connectée à un terminal d'émission TX via un poste d'opérateur OP, un média de transmission NET et une pluralité de terminaux de réception RX1, ..., RXN. La source d'objets DIN comporte, par exemple, un catalogue CAT qui contient des objets prédéfinis, une caméra CAM qui produit des images vidéo, et un magnétophone REC qui produit des données audio. Un opérateur installé au poste d'opérateur OP sélectionne des objets parmi les données fournies par la source DIN, et positionne les objets sélectionnés dans une scène. A cet effet, les images vidéo produites par la caméra CAM et les données audio produites par le magnétophone REC sont traitées comme des objets. Le poste d'opérateur OP délivre deux flux de données : un flux SO d'objets audio / vidéo, et un flux SS de description de scène. Ces flux sont transmis au terminal d'émission TX.

Comme indiqué sur la figure 2, le terminal d'émission TX comporte notamment un encodeur d'objets audio / vidéo ENC-O pour encoder le flux SO d'objets audio / vidéo, et un encodeur de description de scène ENC-S pour encoder le flux SS de description de scène. L'encodeur d'objets audio / vidéo ENC-O délivre des données codées AVO qui sont transmises à un premier dispositif de formatage FO. L'encodeur de description de scène ENC-S délivre des données au format BIFS, notamment des descriptions de scènes DES et des modifications de scènes MOD, qui sont transmises à un second dispositif de formatage FS. Le dispositif de formatage FS délivre des unités de données AU qui contiennent notamment des trames de commandes BIFS (commande de remplacement de scène REP ou commande de modification de scène MOD). Finalement, un multiplexeur MUX permet de multiplexer les données formatées issues des deux dispositifs de formatage FO et FS. Les données multiplexées sont transmises par l'intermédiaire du média de transmission NET.

Dans la pratique, afin de réduire la quantité d'informations à transmettre, le terminal TX commence par envoyer une description de scène complète, et il envoie ensuite des modifications à apporter à la scène qui a été décrite.

Les terminaux de réceptions RX1 à RXN sont susceptibles de se connecter au réseau à tout instant pour recevoir les données transmises par le terminal d'émission TX. Lorsqu'ils se connectent, ils ont besoin d'une description complète de scène pour pouvoir comprendre les modifications transmises. Cette description complète de scène est appelée point d'accès au flux BIFS. Pour permettre aux terminaux de réception de se connecter à un instant quelconque, le terminal d'émission TX transmet régulièrement une description complète de scène, dans une commande de remplacement de scène.

Conformément à l'invention, l'encodeur ENC-S comporte un bloc de codage proprement dit COD, une mémoire MEM qui permet de stocker les données encodées relatives à une description complète de scène, et un bloc de commutation X pour relier l'entrée du second dispositif de formatage FS, soit avec la sortie du bloc de codage COD, soit avec la sortie de la mémoire MEM.

Lorsque le terminal d'émission encode une description de scène, les données encodées sont stockées dans la mémoire MEM. Et les points d'accès au flux BIFS sont ensuite formés avec les données encodées qui sont stockées dans la mémoire.

Dans un mode de réalisation particulièrement simple à mettre en oeuvre, le terminal d'émission transmet :
- des commandes REP de remplacement de scène contenant une description complète d'une scène initiale, au rythme d'une horloge de remplacement H_{REP},
- et des commandes MOD de modification de la scène initiale, au rythme d'une horloge de modification H_{MOD} qui présente un déphasage non nul avec l'horloge de remplacement.

Lorsque la nature des scènes transmises le justifie, la description de scène complète qui est utilisée pour constituer les points d'accès au flux BIFS est renouvelée de temps en temps, au rythme d'une horloge de renouvellement H_{RNW}. Cela signifie que le terminal d'émission réencode une nouvelle description de scène complète, et stocke les données encodées qui en résultent dans la mémoire MEM.

Sur la figure 3 on a représenté un diagramme de temps qui indique les différents instants de transmission dans le cas où le terminal d'émission transmet des commandes REP de remplacement de scène toutes les 2s à partir d'un instant initial t₀, et des commandes MOD de modification de scène toutes les 40ms à partir de l'instant t₁ décalé de 20ms par rapport à t₀.

Dans l'exemple représenté, la description de scène complète qui sert à constituer les points d'accès au flux BIFS est renouvelée toutes les minutes, de telle sorte que toutes les commandes transmises dans l'intervalle de temps [t₀; t₀+1mn[ sont relatives à une même description de scène S₀, et toutes les commandes transmises dans l'intervalle de temps [t₀+1mn; t₀+2mn[ sont relatives à une autre description de scène S₁.

De façon préférentielle, les dispositifs décrits sur la figure 2 sont réalisés sous forme d'un processeur dédié géré par un ou plusieurs programmes d'ordinateur.

L'invention a été décrite dans le cadre du format de description de scène BIFS décrit dans la norme MPEG4. Ceci n'est pas restrictif : elle est applicable à d'autres formats de description de scènes.

## Revendications

1. Réseau de télécommunications comportant au moins :
- un terminal d'émission comportant un codeur de descriptions de scènes multimédia pour délivrer un flux de données qui comporte des points d'accès constitués par des données encodées relatives à une description de scène complète,
- et un terminal de réception susceptible de se connecter à un instant quelconque audit terminal d'émission pour recevoir ledit flux de données,
**caractérisé en ce que** ledit terminal d'émission comporte une mémoire de stockage pour stocker des données encodées à un instant donné, relatives à une description d'une scène complète, les données stockées étant destinées à être utilisées à un ou plusieurs instants ultérieurs pour constituer un ou plusieurs points d'accès.

2. Terminal comportant un codeur de descriptions de scènes multimédia pour délivrer un flux de données qui comporte des points d'accès constitués par des données encodées relatives à une description de scène complète,
**caractérisé en ce qu'**il comporte une mémoire de stockage pour stocker des données encodées à un instant donné, relatives à une description d'une scène complète, les données stockées étant destinées à être utilisées à un ou plusieurs instants ultérieurs pour constituer un ou plusieurs points d'accès.

3. Terminal selon la revendication 2, **caractérisé en ce que** les points d'accès sont introduits dans le flux de données au rythme d'une horloge de remplacement, et **en ce que** le flux de données comporte des données relatives à des modifications à apporter à une scène complète qui sont introduites dans le flux au rythme d'une horloge de modification présentant un déphasage non nul avec l'horloge de remplacement.

4. Terminal selon la revendication 2, **caractérisé en ce que** la description de scène complète pour laquelle des données encodées sont stockées dans ladite mémoire, est renouvelée au rythme d'une horloge de renouvellement.

5. Méthode de constitution d'un point d'accès dans un flux de données, lesdits points d'accès étant constitués par des données encodées relatives à une description de scène complète,
**caractérisée en ce qu'**elle comporte une étape de stockage de données encodées à un instant donné, relatives à une ou plusieurs descriptions de scène complète, les données stockées étant destinées à être utilisées à un ou plusieurs instants ultérieurs pour constituer un ou plusieurs points d'accès.

6. Méthode selon la revendication 6 de constitution d'un point d'accès dans un flux de données, **caractérisée en ce que** les points d'accès sont introduits dans le flux de données au rythme d'une horloge de remplacement, et **en ce que** le flux de données comporte des données relatives à des modifications à apporter à une scène complète qui sont introduites dans le flux au rythme d'une horloge de modification présentant un déphasage non nul avec l'horloge de remplacement.

7. Méthode selon la revendication 6 de constitution d'un point d'accès dans un flux de données, **caractérisée en ce que** la description de scène complète pour laquelle des données sont stockées est renouvelée au rythme d'une horloge de renouvellement.

8. Signal véhiculant un flux de données qui comporte des points d'accès constitués par des données encodées relatives à une description de scène complète, **caractérisé en ce qu'**au moins plusieurs points d'accès successifs sont constitués par une même description de scène complète.

9. Signal selon la revendication 8, **caractérisé en ce que** la description de scène complète qui est contenue dans les points d'accès change au rythme d'une horloge de renouvellement.
